# EUROPEAN PATENT APPLICATION

(11) **EP 4 737 270 A1**
(43) Date of publication of application: **06.05.2026**
(21) Application number: 23943776.7
(22) Date of filing: 18.08.2023
(51) Int. Cl.: B62D 1/16

(54) **STEERING DEVICE**

(30) Priority: 30.06.2023 WO PCT/JP2023/024377
(71) Applicant: JTEKT CORPORATION, Kariya-shi, Aichi 448-8652 (JP)
(72) Inventor: OYA, Toshiaki, Kariya-shi, Aichi 448-8652 (JP); IKEDA, Kosuke, Kariya-shi, Aichi 448-8652 (JP); MIYAKE, Junya, Kariya-shi, Aichi 448-8652 (JP); TAMAIZUMI, Terutaka, Kariya-shi, Aichi 448-8652 (JP); NAMIKAWA, Isao, Kariya-shi, Aichi 448-8652 (JP); ANRAKU, Koji, Kariya-shi, Aichi 448-8652 (JP); HOSONO, Hiroshi, Kariya-shi, Aichi 448-8652 (JP)
(74) Representative: Winter, Brandl - Partnerschaft mbB
(86) International application number: PCT/JP2023/029809
(87) International publication number: WO 2025/004389

(57) **Abstract**

A steering device (10) includes a steering shaft (14) that is able to be operated in a state in which power transmission from steered wheels of a vehicle is interrupted. The steering device includes a coupled rotating body (82) that rotates about an axis of the steering shaft in conjunction with rotation of the steering shaft, and a rotation stopping portion (62) that stops the coupled rotating body by coming into contact with the coupled rotating body. A groove and an elastic member attached to the groove are provided to at least one of an opposing portion of the coupled rotating body and an opposing portion of the rotation stopping portion that face each other when the coupled rotating body and the rotation stopping portion come into contact. The opposing portion of the coupled rotating body and the opposing portion of the rotation stopping portion include contact faces configured to be able to come into contact with each other due to the elastic member being deformed.

## Description

### TECHNICAL FIELD

The present disclosure relates to a steering device.

### BACKGROUND ART

The following Patent Document 1 describes a device that mechanically limits a rotation range of a steering shaft in a steer-by-wire system. More specifically, this device includes a first rotating member that rotates in conjunction with the steering shaft, and a second rotating member that rotates along with the first rotating member. This device also includes a restricting member that comes into contact with the second rotating member and restrains the second rotating member from rotating when a rotation angle of the second rotating member reaches a predetermined angle. When the first rotating member rotates a predetermined amount from the steering angle at which rotation of the second rotating member is restrained by the restricting member, the first rotating member and the second rotating member then come into contact with each other such that the second rotating member restrains rotation of the first rotating member. This restrains the first rotating member from rotating.

Also, the same Document 1 describes that contact faces of the first rotating member and the second rotating member are each covered with an elastic member (paragraph "0076").

### Related Art Documents

### Patent Documents

Patent Document 1: Japanese Unexamined Patent Application Publication No. 2020-69844 (JP 2020-69844 A)

### SUMMARY OF THE INVENTION

### Problem to be Solved by the Invention

However, in a case in which contact faces are covered with an elastic member as described above, the steering angle readily fluctuates at a point in time of the rotation of the steering shaft being restricted. Accordingly, precision of detecting an upper limit value of a rotation angle of the steering shaft decreases.

### Means for Solving the Problem

In one aspect of the present disclosure, a steering device is provided. The steering device includes a steering shaft that is able to be operated in a state in which power transmission from steered wheels of a vehicle is interrupted. The steering device includes a coupled rotating body that rotates about an axis of the steering shaft in conjunction with rotation of the steering shaft, and a rotation stopping portion that stops the coupled rotating body by coming into contact with the coupled rotating body. The coupled rotating body includes an opposing portion that faces the rotation stopping portion when in contact with the rotation stopping portion. The rotation stopping portion includes an opposing portion that faces the coupled rotating body when in contact with the coupled rotating body. A groove and an elastic member attached to the groove are provided to at least one of the opposing portion of the coupled rotating body and the opposing portion of the rotation stopping portion. The opposing portion of the coupled rotating body and the opposing portion of the rotation stopping portion include contact faces configured to be able to come into contact with each other due to the elastic member being deformed.

### BRIEF DESCRIPTION OF THE DRAWINGS

[FIG. 1] is a diagram illustrating a configuration of a steering system according to a first embodiment.
[FIG. 2] is an exploded perspective view illustrating a configuration of part of a reactive force actuator illustrated in FIG. 1.
[FIG. 3] is an exploded perspective view illustrating the configuration of part of the reactive force actuator illustrated in FIG. 2.
[FIG. 4] is a cross-sectional view illustrating the configuration of part of the reactive force actuator illustrated in FIG. 2.
[FIG. 5] is a diagram illustrating operations of a stopper function of the reactive force actuator illustrated in FIG. 2.
[FIG. 6A] is a cross-sectional view taken along line 6-6 in FIG. 3.
[FIG. 6B] is a cross-sectional view of a comparative example with respect to the configuration in FIG. 6A.
[FIG. 7] is a cross-sectional view of an end stopper and so forth.
[FIG. 8] is an exploded perspective view illustrating a configuration of part of a reactive force actuator according to a second embodiment.

### MODES FOR CARRYING OUT THE INVENTION

### <First Embodiment>

A first embodiment will be described below with reference to the drawings.

### "Prerequisite Configuration"

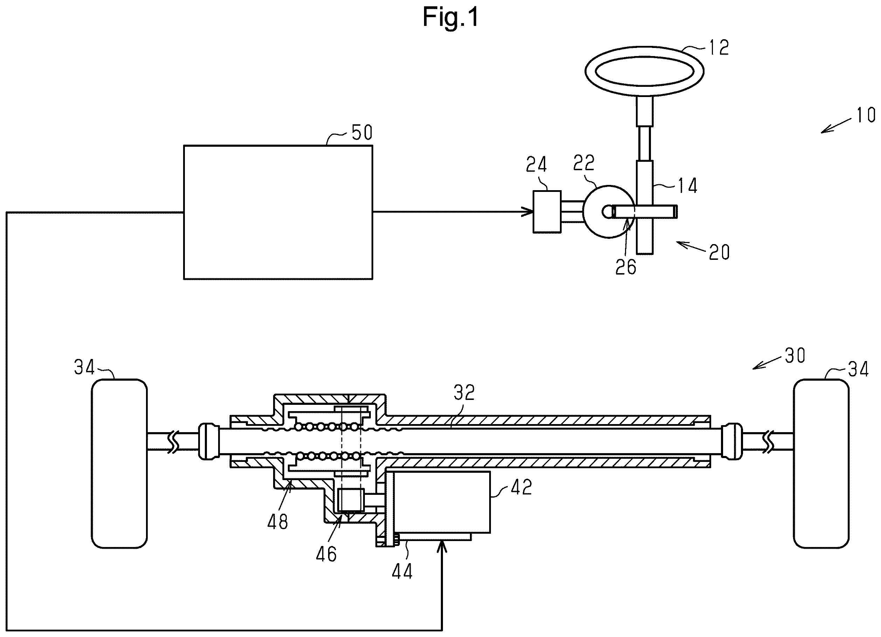

A steering device 10 of a vehicle illustrated in FIG. 1 is a steer-by-wire type system. The steering device 10 includes a steering wheel 12, a steering shaft 14, a reactive force actuator 20, and a steering actuator 30. The steering shaft 14 is linked to the steering wheel 12. The reactive force actuator 20 is used to apply a force that counters force exerted by a driver when operating the steering wheel 12. The reactive force actuator 20 includes a reactive force motor 22, a reactive force inverter 24, and a reactive force reduction mechanism 26. The reactive force motor 22 applies a steering reactive force, which is a force that counters steering, to the steering wheel 12 via the steering shaft 14. The reactive force motor 22 is linked to the steering shaft 14 via the reactive force reduction mechanism 26. The reactive force reduction mechanism 26 is made up of, for example, a worm and a wheel.

The steering actuator 30 is used to steer steered wheels 34 in accordance with steering intentions of the driver, indicated by the operation of the steering wheel 12 by the driver. The steering actuator 30 includes a rack shaft 32, a steering motor 42, a steering inverter 44, a steering transmission mechanism 46, and a conversion mechanism 48. The steering transmission mechanism 46 is made up of a belt transmission mechanism. Rotational power of the steering motor 42 is transmitted to the conversion mechanism 48 by the steering transmission mechanism 46. The conversion mechanism 48 converts the rotational power, which is transmitted thereto, into displacement power in an axial direction of the rack shaft 32. The steered wheels 34 are steered by the displacement of the rack shaft 32 in the axial direction.

A steering control device 50 controls a controlled variable of the steering wheel 12 and the steered wheels 34, which are control objects. That is to say, the steering control device 50 controls the steering reactive force that counters steering by the driver, which is the controlled variable of the steering wheel 12 which is a control object. The steering control device 50 also controls a steered angle, which is the controlled variable of the steered wheels 34 which is a control object. The steered angle is a turning angle of tires serving as the steered wheels 34.

The steering control device 50 executes processing for learning a neutral position of the steering shaft 14 under predetermined conditions. The neutral position corresponds to a straight-ahead direction of the vehicle. As an example, the steering control device 50 detects an upper limit value on a right-turn side and an upper limit value on a left-turn side of the steering shaft 14, and thereby determines a middle point therebetween as the neutral position.

### "Configuration of Reactive Force Actuator 20"

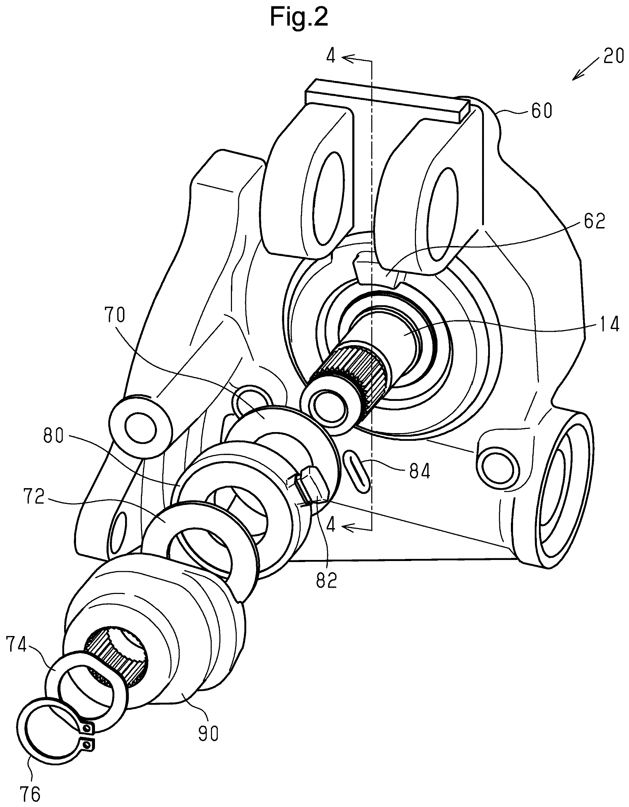

FIG. 2 illustrates part of a configuration of the reactive force actuator 20. As illustrated in FIG. 2, the reactive force actuator 20 includes a housing 60 that is fixed to a vehicle body. The steering shaft 14 is inserted into the housing 60. The housing 60 rotatably supports the steering shaft 14. The steering shaft 14 is inserted into a plurality of ring-like members. The ring-like members include a washer 70, an intermediate stopper 80, a washer 72, an end stopper 90, a wave washer 74, and a C-shaped snap ring 76.

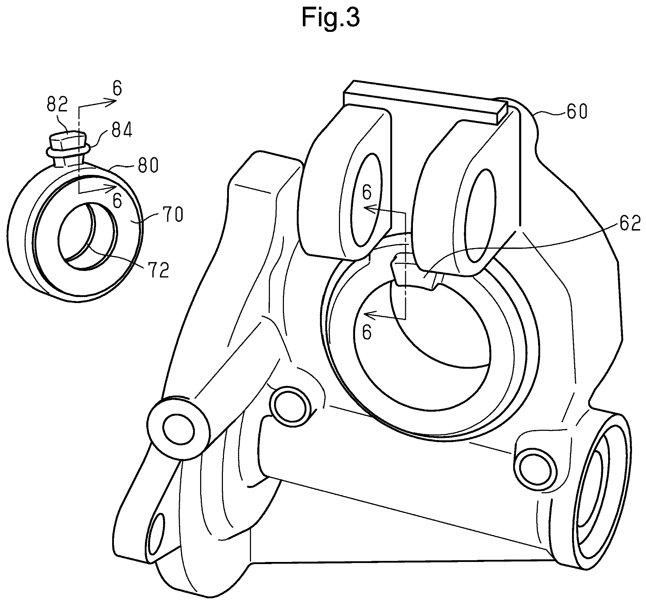

The housing 60 is provided with a protrusion 62 serving as a rotation stopping portion that restricts rotation of the intermediate stopper 80. As illustrated in FIG. 3, the intermediate stopper 80 is provided with a protrusion 82 of which the rotation is restricted by the protrusion 62. An O-ring 84 is fit onto the protrusion 82. The O-ring 84 is made of rubber.

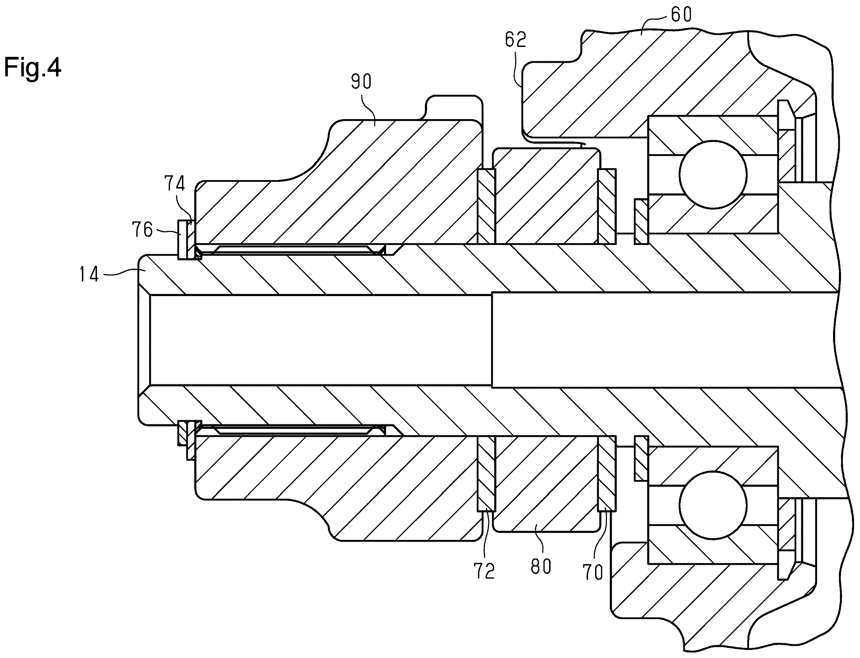

FIG. 4 is a cross-section taken along line 4-4 in FIG. 2. As illustrated in FIG. 4, an elastic force in a rightward direction in the drawing is applied to the end stopper 90 by the wave washer 74. Thus, the elastic force in the rightward direction is applied to the intermediate stopper 80 via the washer 72. On the other hand, the steering shaft 14 includes a reduced diameter portion at an end portion thereof on a left side in the drawing. The washer 70, the intermediate stopper 80, and the washer 72 are disposed at the reduced diameter portion of the steering shaft 14. Accordingly, displacement of the washer 70 to a right side in the drawing is restricted. Accordingly, the intermediate stopper 80 is subjected to the elastic force toward the right side in the drawing by the washer 72, and also is subjected to an elastic force toward the left side in the drawing by the washer 70.

The end stopper 90 is fixed to the steering shaft 14 by serration fitting. Accordingly, the end stopper 90 rotates integrally with the steering shaft 14 in conjunction with rotation of the steering shaft 14. In conjunction with rotation of the end stopper 90, the intermediate stopper 80 is rotated along therewith. Therefore, the protrusion 82 makes up a coupled rotating body that rotates about an axis of the steering shaft 14 in conjunction with the rotation of the steering shaft 14.

### "Restriction of Rotation of Steering Shaft 14"

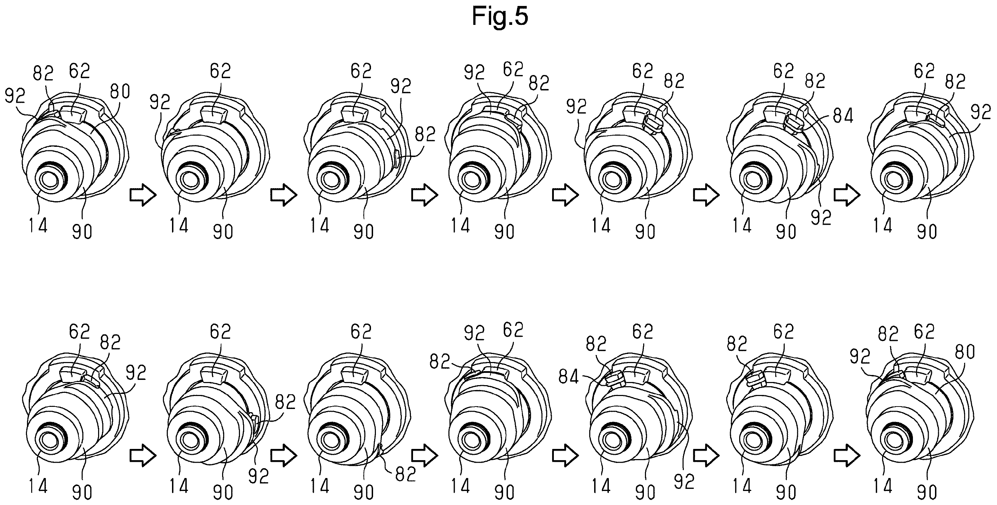

An upper tier in FIG. 5 illustrates a case in which the steering shaft 14 rotates to the right-turn side. A left end of the upper tier in FIG. 5 illustrates a state in which a steering angle θs, which is a rotation angle of the steering shaft 14, has a value corresponding to an end portion on the left-turn side. The upper tier in FIG. 5 illustrates a state in which the steering shaft 14 rotates toward the right-turn side as transitioning to the right side in the drawing. **In** particular, a right end of the upper tier in FIG. 5 illustrates a state in which the steering angle θs has a value corresponding to an end portion on the right-turn side.

As illustrated in the upper tier in FIG. 5, in a case in which the steering shaft 14 rotates from the end portion on the left-turn side by making a right turn, the intermediate stopper 80 is rotated along with the end stopper 90 in conjunction with the end stopper 90 rotating. The middle of the upper tier in FIG. 5 illustrates a state in which the protrusion 82 of the intermediate stopper 80 has come into contact with the protrusion 62 of the housing 60 via the O-ring 84. Thus, the intermediate stopper 80 cannot turn right any further. Hence, the end stopper 90 rotates alone in conjunction with rotation of the steering shaft 14. Then, when the steering shaft 14 rotates further, a protrusion 92 of the end stopper 90 comes into contact with the protrusion 82 of the intermediate stopper 80, and thus, the end stopper 90 cannot turn to the right any further. This state is illustrated at the end portion to the right side of the upper tier in FIG. 5. In this state, the steering shaft 14 cannot rotate toward the right side any further. The steering angle θs at this time is the upper limit value on the right-turn side.

A lower tier in FIG. 5 illustrates a case in which the rotation angle of the steering shaft 14 rotates to the left-turn side. A left end of the lower tier in FIG. 5 illustrates a state in which the steering angle θs has the value corresponding to the end portion on the right-turn side. The lower tier in FIG. 5 illustrates a state in which the steering shaft 14 rotates toward the left-turn side as transitioning to the right side in the drawing. In particular, a right end of the lower tier in FIG. 5 illustrates a state in which the steering angle θs has the value corresponding to the end portion on the left-turn side.

As illustrated in the lower tier in FIG. 5, in a case in which the steering shaft 14 rotates from the end portion on the right-turn side by making a left turn, the intermediate stopper 80 is rotated along with the end stopper 90 in conjunction with rotation of the end stopper 90. The middle of the lower tier in FIG. 5 illustrates a state in which the protrusion 82 of the intermediate stopper 80 has come into contact with the protrusion 62 of the housing 60 via the O-ring 84. Accordingly, the intermediate stopper 80 cannot turn left any further. Hence, the end stopper 90 rotates alone in conjunction with rotation of the steering shaft 14. Then, when the steering shaft 14 rotates further, the protrusion 92 of the end stopper 90 comes into contact with the protrusion 82 of the intermediate stopper 80, and thus, the end stopper 90 cannot turn left any further. This state is illustrated at the end portion on the right side of the lower tier in FIG. 5. In this state, the steering shaft 14 cannot rotate toward the left side any further. The steering angle θs at this time is the upper limit value on the left-turn side.

Note that FIG. 5 exemplifies a case in which the steering angle θs changes from one of two values of the value corresponding to the end portion of the left-turn side and the value corresponding to the end portion of the right-turn side, to the other value. However, in reality, it is rare for the steering angle θs to reach the value corresponding to the end portion of the left-turn side or to reach the value corresponding to the end portion of the right-turn side. The steering angle θs normally varies within an intermediate region between the value corresponding to the end portion of the left-turn side and the value corresponding to the end portion of the right-turn side. In this case, in a state in which the protrusion 92 of the end stopper 90 is not in contact with the protrusion of the intermediate stopper 80, the intermediate stopper 80 is rotated along in conjunction with the rotation of the end stopper 90.

### "Regarding Suppression of Striking Sound Caused by Collision of Protrusion 82, Protrusion 92, and Protrusion 62"

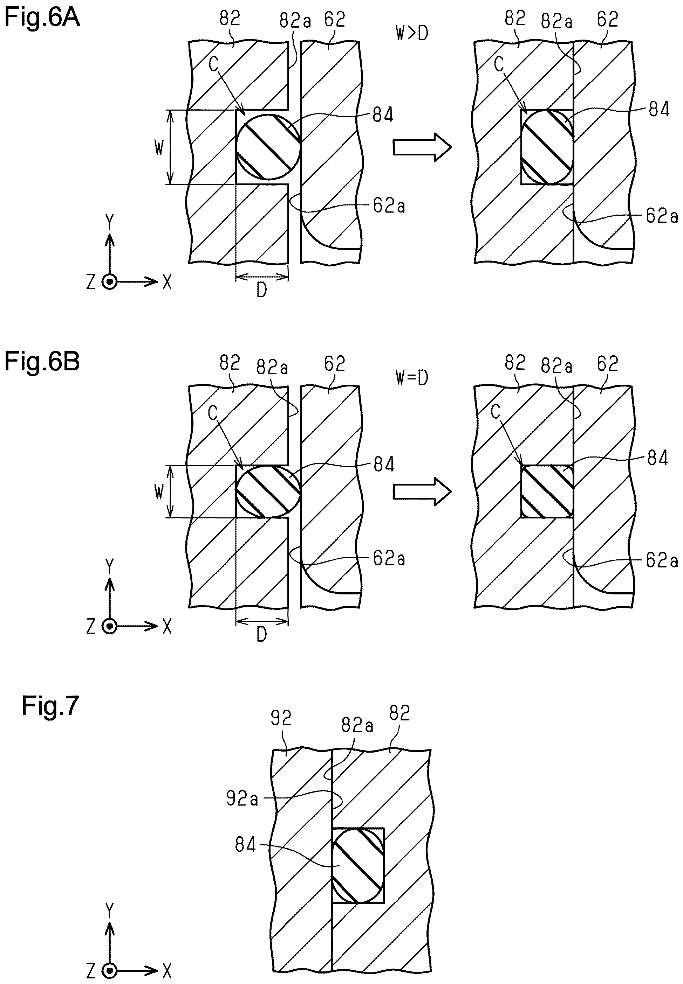

FIG. 6A is a cross-section taken along line 6-6 in FIG. 3. That is to say, FIG. 6A is a cross-section of opposing portions of the protrusion 82 and the protrusion 62 that face each other when the protrusion 82 and the protrusion 62 come into contact with each other. Note that an x-axial direction in FIG. 6A indicates a direction of travel of the protrusion 82 of the intermediate stopper 80 immediately before the protrusion 82 comes into contact with the protrusion 62 of the housing 60. Specifically, the direction of travel of the protrusion 82 is a positive direction along the x axis. Also, a z-axial direction is a circumferential direction of the O-ring 84. That is to say, an xy plane in FIG. 6A is a plane orthogonal to the circumferential direction of the O-ring 64.

As illustrated in FIG. 6A, a groove C is formed in the protrusion 82 of the intermediate stopper 80. The O-ring 84 is accommodated in the groove C. The groove C is formed at least in the aforementioned opposing portion of the protrusion 82. Note, however, that in a state in which the protrusion 82 of the intermediate stopper 80 and the protrusion 62 of the housing 60 are away from each other, the O-ring 84 protrudes from the groove C in the x-axial direction.

The left side of FIG. 6A illustrates a point in time of the protrusion 62 of the housing 60 coming into contact with the O-ring 84. In this state, a contact face 62a of the protrusion 62 is not in contact with a contact face 82a of the protrusion 82. Now, the contact face 82a of the protrusion 82 is a portion adjacent to the groove C in a y-axial direction.

The right side of FIG. 6A illustrates a state in which the contact face 62a of the protrusion 62 comes into contact with the contact face 82a of the protrusion, 82 due to deformation of the O-ring 84. In the present embodiment, in a cross-section along the xy plane in FIG. 6A, a proportion of a cross-sectional area of the O-ring 84 as to a cross-sectional area of the groove C is set to be 0.7 or less. This proportion may be 0.5 to 0.7. This is a setting to make the proportion to be smaller than a value in normal usage of the O-ring 84. That is to say, the O-ring 84 is usually used to improve sealing performance. In this case, it is desirable that the O-ring 84 fills the groove C without any space left. On the other hand, in the present embodiment, the O-ring 84 is used to absorb impact. Accordingly, accommodating the O-ring 84 in the groove C with a sufficient margin enables durability of the O-ring 84 to be increased.

Also, in the present embodiment, a second dimension W of the groove C is greater than a first dimension D in the cross-section along the xy plane. The second dimension W is a dimension of the groove C along a second direction, which is the y-axial direction. The first dimension D is a dimension of the groove C along a first direction, which is the x-axial direction. This enables the O-ring 84 to easily expand in the y-axial direction within the groove C by being compressed.

On the other hand, FIG. 6B exemplifies a case in which the proportion is 0.7 or more and also the second dimension W and the first dimension D are equal to each other. In this case, the O-ring 84 is subjected to a large strain due to compression. Therefore, there is concern that the durability of the O-ring 84 may be reduced.

### <Functions and Effects of Embodiment>

When the steering wheel 12 is operated, the end stopper 90 rotates in conjunction with the steering shaft 14. Thus, the intermediate stopper 80 is rotated along therewith. When the intermediate stopper 80 is displaced to the position illustrated at the middle in the upper tier in FIG. 5 or at the middle in the lower tier in FIG. 5, the protrusion 82 of the intermediate stopper 80 comes into contact with the protrusion 62 of the housing 60, thereby restricting further rotation of the intermediate stopper 80. At this time, the O-ring 84 provided in the groove C of the intermediate stopper 80 comes into contact with the contact face 62a of the protrusion 62, thereby suppressing the striking sound.

On the other hand, in a case in which the steering control device 50 performs learning of the neutral position of the steering shaft 14, the steering control device 50 performs a large turning operation on the steering shaft 14. Thus, the end stopper 90 is displaced to the position illustrated at the right end in the upper tier in FIG. 5 or the right end in the lower tier in FIG. 5. Thus, the protrusion 92 of the end stopper 90 comes into contact with the protrusion 82 of the intermediate stopper 80, thereby restricting further rotation of the end stopper 90. At this time, when the steering control device 50 applies a great force to further rotate the steering shaft 14, the O-ring 84 deforms, causing the contact face 82a of the protrusion 82 of the intermediate stopper 80 and the contact face 62a of the protrusion 62 of the housing 60 to come into contact with each other. Also, the deformation of the O-ring 84 causes the contact face 82a of the protrusion 82 of the intermediate stopper 80 and a contact face 92a of the protrusion 92 of the end stopper 90 to come into contact with each other, as illustrated in FIG. 7.

Thus, when performing learning of the neutral position, the contact face 82a of the protrusion 82 of the intermediate stopper 80 comes into contact with both the contact face 62a of the protrusion 62 of the housing 60 and the contact face 92a of the protrusion 92 of the end stopper 90. Accordingly, the upper limit value on the right-turn side and the upper limit value on the left-turn side of the steering shaft 14 can be detected with high precision, as compared to a case in which these members are not in contact with each other.

According to the above embodiment, the following advantageous effects can be further obtained.

(1-1) The O-ring 84 that is made of rubber is used as a member for absorbing the impact when the protrusion 82 of the intermediate stopper 80 comes into contact with the protrusion 62 of the housing 60 and the protrusion 92 of the end stopper 90. The O-ring 84 is made of rubber, and thus has not only elasticity but also viscosity. That is to say, the O-ring 84 has a repulsive force that has a positive correlation with the displacement speed. Accordingly, the impact can be sufficiently mitigated.

### <Second Embodiment>

A second embodiment will be described below with reference to the drawings, focusing on differences from the first embodiment.

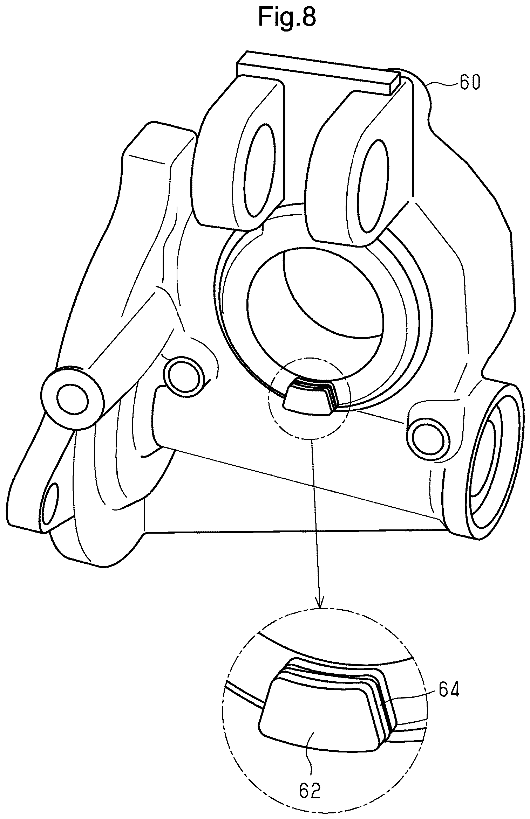

In the present embodiment, the O-ring 84 is not provided on the protrusion 82 of the intermediate stopper 80. Instead, as illustrated in FIG. 8, an O-ring 64 is provided on the protrusion 62 of the housing 60. More specifically, a groove is formed in the protrusion 62, and the O-ring 64 is accommodated in the groove. Here, a cross-sectional area of the O-ring 64 in a predetermined plane orthogonal to a circumferential direction of the O-ring 64 is 70% or less of the cross-sectional area of the groove C in the predetermined plane. Also, the first dimension D, which is the dimension in a depth direction of the groove C, is smaller than the second dimension W, which is the dimension in a width direction.

### <Other Embodiments>

Note that the present embodiment can be carried out modified as described below. The present embodiment and the following modifications can be carried out combined insofar as no technical contradictions arise.

### "Regarding Device That Restricts Rotation of Steering Shaft 14"

- The configuration in which the intermediate stopper 80 rotates in conjunction with the rotation of the end stopper 90 is not limited to a configuration in which frictional force between the intermediate stopper 80 and the end stopper 90 is utilized. For example, the intermediate stopper 80 may be configured to rotate by the protrusion 92 of the end stopper 90 pressing the protrusion 82 of the intermediate stopper 80 in conjunction with rotation of the end stopper 90. In this case, when the rotation of the intermediate stopper 80 is stopped by the protrusion 82 of the intermediate stopper 80 coming into contact with the protrusion 62 of the housing 60, the rotation of the end stopper 90 is also stopped.
   - The device that restricts rotation of the steering shaft 14 is not limited to the devices exemplified in the above embodiments. For example, the device may be one that includes a plurality of the intermediate stoppers, which is second rotating members, rotating in conjunction with the rotation of the end stopper 90, which is a first rotating member. Now, a case in which the device includes a first intermediate stopper and a second intermediate stopper will be described as an example. In such a case, the first intermediate stopper and the second intermediate stopper are rotated along in conjunction with the rotation of the end stopper 90. A protrusion of the first intermediate stopper then comes into contact with the protrusion 62 serving as the rotation stopping portion of the housing 60, thereby impeding rotation of the first intermediate stopper. Accordingly, the second intermediate stopper alone is rotated along with the end stopper 90, in conjunction with the rotation thereof. When the protrusion of the second intermediate stopper then comes into contact with the protrusion of the first intermediate stopper, whereby the rotation of the second intermediate stopper is impeded. Accordingly, the end stopper 90 rotates alone. The protrusion 92 of the end stopper 90 then comes into contact with the protrusion of the second intermediate stopper, whereby the rotation of the end stopper 90 is impeded. That is to say, further rotation of the steering shaft 14 is impeded.

### "Regarding Elastic Members"

- In the second embodiment, a groove may also be provided in the protrusion 92 of the end stopper 90, and an O-ring may be accommodated in the groove.
   - The groove and the O-ring may be provided just on the protrusion 92 of the end stopper 90.
- The elastic members are not limited to the O-rings 84 and 64. For example, the elastic members may be rubber that is provided only in the region surrounded by the contact face 82a in FIG. 6A and the region surrounded by the contact face 82a in FIG. 7.
   - It is not essential for the elastic member to be rubber. Even in this case, when the elastic member has not only elasticity but also viscosity, the impact can be reduced in comparison with when the elastic member does not have viscosity. However, it is not essential for the elastic member to have viscosity.

### "Regarding Groove"

- It is not essential that the proportion of the cross-sectional area of the O-ring as to the cross-sectional area of the groove be 0.7 or less in a cross-section orthogonal to the circumferential direction of the O-ring. Even if the proportion is greater than 0.7, the contact face 62a and the contact face 82a can be brought into contact with each other, as illustrated in FIG. 6B.
   - It is not essential that the second dimension W of the groove C along the width direction be greater than the first dimension D along the depth direction. For example, even in a case in which the second dimension W and the first dimension D are equal, the contact face 62a and the contact face 82a can be brought into contact with each other, as exemplified in FIG. 6B.

### "Others"

- In each of the above embodiments, the steering device 10 has a linkless structure in which the steering wheel 12 and the steered wheels 34 are mechanically separated at all times, but this is not limiting, and for example, the steering device 10 may have a structure in which the steering wheel 12 and the steered wheels 34 are mechanically separable by a clutch.
   - In the present specification, "at least one of A and B" should be understood to mean "A only, B only, or both A and B."

## Claims

1. A steering device including a steering shaft that is able to be operated in a state in which power transmission from steered wheels of a vehicle is interrupted, the steering device comprising:
a coupled rotating body that rotates about an axis of the steering shaft in conjunction with rotation of the steering shaft; and
a rotation stopping portion that stops the coupled rotating body by coming into contact with the coupled rotating body, wherein
the coupled rotating body includes an opposing portion that faces the rotation stopping portion when in contact with the rotation stopping portion,
the rotation stopping portion includes an opposing portion that faces the coupled rotating body when in contact with the coupled rotating body,
a groove and an elastic member attached to the groove are provided to at least one of the opposing portion of the coupled rotating body and the opposing portion of the rotation stopping portion, and
the opposing portion of the coupled rotating body and the opposing portion of the rotation stopping portion include contact faces configured to be able to come into contact with each other due to the elastic member being deformed.

2. The steering device according to claim 1, wherein the elastic member is a member having viscosity and elasticity.

3. The steering device according to claim 1, wherein the elastic member is an O-ring.

4. The steering device according to claim 3, wherein, in a cross-section of the O-ring taken along a plane orthogonal to a circumferential direction, a proportion of a cross-sectional area of the O-ring as to a cross-sectional area of the groove is 0.7 or less.

5. The steering device according to claim 3, wherein:
a first dimension that is a dimension of the groove in a first direction is smaller than a second dimension that is a dimension of the groove in a second direction;
in a cross-section taken along a plane orthogonal to a circumferential direction of the O-ring, the first direction is a direction in which the contact face of the coupled rotating body is displaced when the contact face of the coupled rotating body and the contact face of the rotation stopping portion transition from a contact state to a non-contact state; and
the second direction is a direction orthogonal to the first direction in the cross-section taken along the plane orthogonal to the circumferential direction of the O-ring.

6. The steering device according to claim 1, further comprising:
a first rotating member linked to the steering shaft; and
a second rotating member that rotates in conjunction with rotation of the steering shaft, wherein
the coupled rotating body is provided on the second rotating member, and
the first rotating member is configured such that, in a state in which rotation of the second rotating member in a predetermined direction is restrained by the rotation stopping portion, and in a case in which the first rotating member is in contact with the second rotating member, rotation in the predetermined direction is restrained.

7. The steering device according to claim 1, wherein the elastic member is provided on the coupled rotating body.

8. The steering device according to claim 1, wherein the elastic member is provided on the rotation stopping portion.
